Europäisches Patentamt

European Patent Office

Office européen des brevets

(11) Publication number: **0 284 432 B1**

## EUROPEAN PATENT SPECIFICATION

(45) Date of publication of patent specification: **13.10.93**

(51) Int. Cl.⁵: **H04N 5/32**, H04N 5/33, H04N 5/335, H04N 5/30

(21) Application number: **88302714.6**

(22) Date of filing: **25.03.88**

(54) Radiation image detecting system.

(30) Priority: **25.03.87 JP 71097/87**

(43) Date of publication of application:
**28.09.88 Bulletin 88/39**

(45) Publication of the grant of the patent:
**13.10.93 Bulletin 93/41**

(84) Designated Contracting States:
**DE GB**

(56) References cited:

**I.E.E.E. TRANSACTIONS ON MEDICAL IMAG-
ING, vol. MI-5, no. 4, December 1986,pages
222-228; VAN GIESSEN et al.: "Time-coded
aperture tomography:Experimental results"**

**PHYSICS IN MEDICINE & BIOLOGY, vol. 24,
no. 5,Septeber 1979; K.F. KORAL et al.:
"Application of ART to time-coded Emission
Tomography"**

**NUCLEAR INSTRUMENTS & METHODS, vol.
150, no. 2, April 1978, pages 321-323; B.
BRAUNECKER et al.: "Pattern recognition
with spatially modulated X-rays"**

(73) Proprietor: **SHIMADZU CORPORATION
1 Kuwabara-cho
Nishinokyo Nakakyo-ku
Kyoto 604(JP)**

(72) Inventor: **Kiri, Motosada
14-11 6-chome
Ooe Nishi Shinbayashi-cho
Nishikyo-ku Kyoto 610-11(JP)**

(74) Representative: **Smith, Philip Antony et al
REDDIE & GROSE
16 Theobalds Road
London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a radiation image detecting system having the radiation image receiving plane constituted of a plurality of two-dimensionally arrayed radiation sensors.

In a typical example of a system for electronically detecting a radiation image with the image divided into pixels, the number of pixels often reaches the order of $10^6$, provided that a typical image receiving area of 30 x 30 cm$^2$ is required with the pixels having a very small irradiation area of the order of $10^{-1}$ mm$^2$ to comply with a required power of image detection. In such a case it makes the system very complex and expensive to provide a number of radiation sensors corresponding to the number of pixels.

A possible conventional measure to overcome the above disadvantage and difficulty is to scan the imaginary image-receiving plane with a single radiation sensor two-dimensionally or with a series of linearly arrayed radiation sensors one-dimensionally (in the direction perpendicular to the array). However, such a scanning method by a single sensor or arrayed sensors has a decisive disadvantage that not only it takes a long time to complete the scanning over the entire area of the image receiving plane, but also the efficiency of radiation detection is very low because the radiation irradiating the image receiving plane is wasted except for a travelling spot or linear region where the scanning single sensor or the sensor array is being irradiated. Suppose the case where a series of n linearly arrayed sensors one-dimensionally scans the entire area of an image receiving plane divided into n x n pixels, the efficiency of radiation detection is 1/n. In case where the same area is two-dimensionally scanned by a single sensor, the efficiency is further decreased to 1/n$^2$.

IEEE TRANSACTIONS ON MEDICAL IMAGING, Vol.MI-5, No.4, December 1986, pages 222-228; VAN GIESSEN et al: "Time-coded aperture tomography: Experimental results" and PHYSICS IN MEDICINE AND BIOLOGY, Vol.24, No. 5, September 1979; K.J.KOPAL et al: "Application of ART to time-coded Emission Tomography" disclose the use in tomography of a tide-coded aperture system. Data acquisition is performed a large number of times with a different pattern of pinholes for each occasion. The data acquired is then processed by a computer to reconstruct the image.

The present invention aims at solving the above disadvantages and difficulties accompanying the conventional system for electronically detecting a radiation image with the image divided into pixels, by improving the system so as to complete a radiation image detection in a short time at a relatively high efficiency of radiation detection without filling up all the pixels with a corresponding number of radiation sensors.

The improved system employs the so-called coded aperture method.

The present invention provides a radiation image detecting system for detecting a radiation image as an assembly of pixels by means of a coded-aperture method, said system comprising a radiation image receiving plane formed by a plurality of sensor groups for each equal area sub-matrix of a matrix of pixels, each of the sensor groups for an individual sub-matrix consisting of a plurality of radiation sensors which cover one or more pixels but differ in arrangement from the sensors of the other sensor group or groups, means for successively and separately bringing each one of the sensor groups for each sub-matrix into correspondence with the area of that sub-matrix, a memory for storing the outputs of the sensors in the successive groups as coded pixel signals, and a computing means for deriving from the coded pixel signals a set of pixel signals corresponding to all the individual pixels within the area of the sub-matrix.

In embodiments of the present invention which will be described below all the pixels supposed to form a pixel matrix are grouped into equal-sized areas, each of which includes the same number of pixels forming a square sub-matrix of pixels. The pixel signals corresponding to the pixels contained in the above sub-matrix are obtained in the form of coded signals by being detected a plurality of times successively with a plurality of sensor groups which are mane purposefully different from one another in the number, arrangement pattern and size of the sensors. Each sensor in every sensor group, in general, covers a plurality of pixels, but the sensors in some sensor groups do not completely cover all the pixels included in the sub-matrix, some pixels being left in a state that no signal is detected therefrom. The output signals from sensors are digitally processed with a computing means so as to finally give a radiation image consisting of pixels supposed originally on the image receiving plane. The details of the function is made clear later in conjunction with the description of some embodiments of the invention.

In the radiation image detecting system based on the present invention, the number of sensors in the image receiving plane is made much smaller than the number of supposed pixels, since, as is mentioned above, some sensors respectively take charge of more than one pixel. A decrease in the number of sensors causes the constitution of both the image receiving plane and the electronics concerned to be simple. Nevertheless, the efficiency of radiation detection, as will be described later, is kept at a relatively high value, though lower than the maximum value of unity expected when the image receiving plane consists of sensors the number of which is equal to the number of pixels.

The present invention is not only employed in obtaining a plane radiation image in a wide range of wavelength such as gamma rays, X-rays, visible rays and infra-red rays, but also expected to be very effective in the field of tomographic image detection.

In the following the present invention is described in further detail with reference to the accompanying drawings, in which:

Fig. 1(A) and (B) respectively illustrate a block diagrammatic constitution of an embodiment of the invention and the relation between the supposed pixels and the radiation sensor arrangement employed in the embodiment;

Fig. 2 shows the sensor arrangement on the image receiving plane employed in another embodiment of the invention;

Fig. 3 shows the sensor arrangement on the image receiving plane employed in a further embodiment of the invention; and

Fig. 4 shows an example of the sensor arrangement which cannot effect the invention.

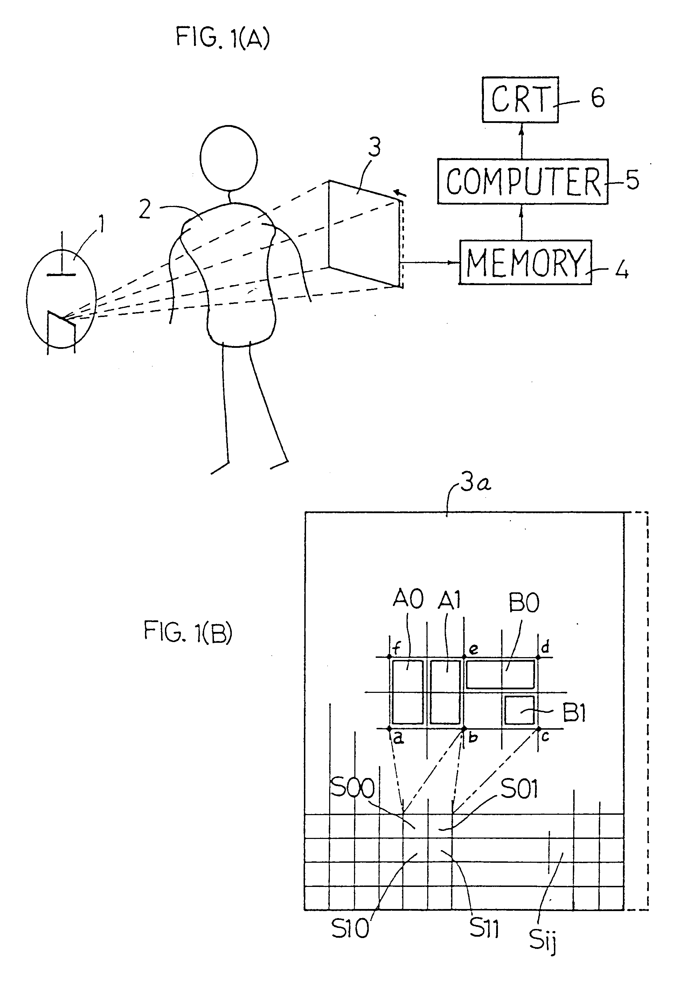

Referring to Fig. 1(A), which block diagrammatically shows the constitution of an embodiment of the present invention as applied to X-ray radiograph, X-rays radiated from an X-ray source 1 penetrate a patient 2 as an object and project an X-ray image on an image receiving plane 3, which consists of X-ray sensors arranged as described later with reference to Fig. 1(B). The output signals of the sensors are stored in a memory 4 and then digitally processed by a microcomputer 5 so as to give X-ray image signals. The X-ray signals are transferred to a CRT 6 to display thereon in a visible form the X-ray image projected on the plane 3. On the image receiving plane 3 there is supposed, as illustrated in Fig. 1(B), a pixel plane 3a consisting of many small pixel areas Sij. On the other hand the image receiving plane 3 itself is made up of different-sized X-ray sensors made to purposefully correspond to the pixel areas, as is described in the following with two sensor groups exemplified. The two sensor groups, which are respectively specified by two symbol groups a-b-e-f and b-c-d-e, contain sensors AO, A1 and BO, B1, respectively.

With such arrangement of sensors, in the first plane an X-ray image detection is carried out with the sensor group a-b-e-f made to correspond to pixel areas S00, S01, S10 and S11. In this case the sensors AO and A1 respectively cover pixels SOO, S1O and S01, S11. In the next place the second image detection is carried out with the sensor group b-c-d-e made to correspond to the same pixel areas SOO, SO1, S10 and S11. In this second case the sensors BO and B1 cover two pixels SOO, SO1 and one pixel S11, respectively. Pixel S10 is left uncovered. In the above two successive detection operations, the output signals (AO), (A1), (BO) and (B1) are given by the four equations shown below:

$$(AO) = 1x(SOO) + Ox(SO1) + 1x(S10) + Ox(S11)$$
$$(A1) = 0x(SOO) + 1x(SO1) + 0x(S10) + 1x(S11)$$
$$(BO) = 1x(SOO) + 1x(SO1) + 0x(S10) + Ox(S11)$$
$$(B1) = 0x(SOO) + Ox(SO1) + 0x(S10) + 1x(S11),$$

where the symbols (SOO) and the like represent the signals supposed to be outputted from the pixel areas SOO and the like if they were covered by respective single sensors. The above simultaneous linear equations can easily be solved by the microcomputer 6 to give:

$$(SOO) = (BO) + (B1)-(A1)$$
$$(SO1) = (A1)-(B1)$$
$$(S1O) = (AO) + (A1)-(BO)-(B1)$$
$$(S11) = (B1).$$

According to this embodiment, the number of sensors is four for eight pixels, while the efficiency of radiation detection is kept at a relatively high value of $7/8 = 87.5\%$.

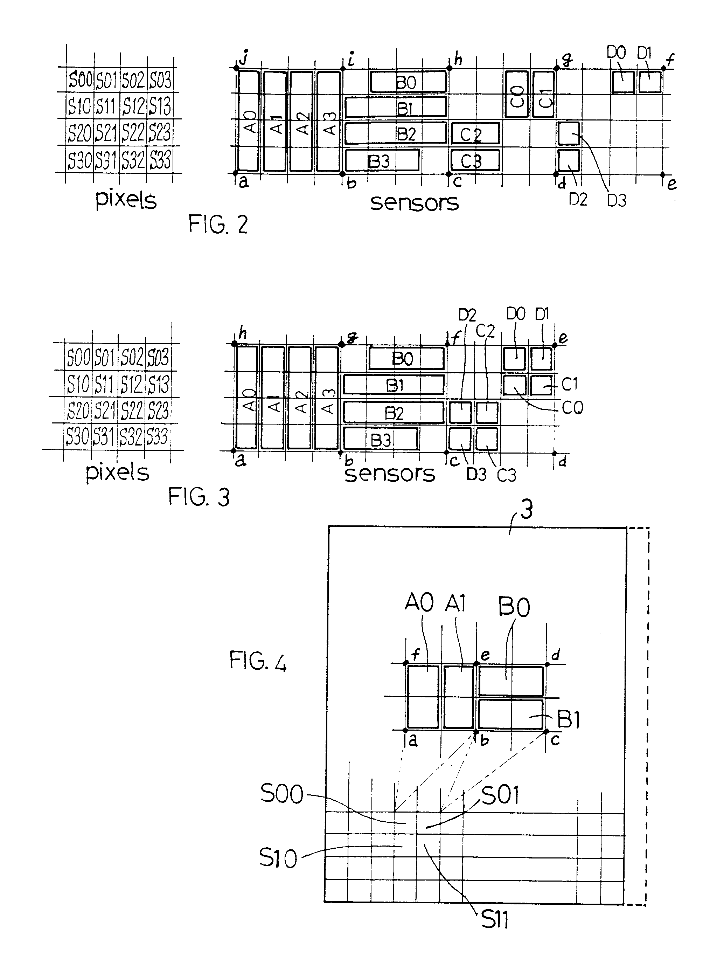

The present invention can be embodied with other various combinations of pixel group and sensor groups. The examples of the combination are shown in Figs. 2 and 3. In the combination shown in Fig. 2 the efficiency of radiation detection is 65.625%, while it is 79.17% in the embodiment employing the combination shown in Fig.3.

In the present invention it is important to select the size and arrangement of the sensors so that the determinant constituted with the coefficients 0 and 1 in the simultaneous equations similar to those given above is not zero, because, if the determinant is zero, th equations cannot be solved. Fig.4 shows an example of sensor groups which make the determinant zero.

It is now to be mentioned that the present invention can further be applied to the radiation image detecting system, in which the pixels are arranged in the form of non-matrix.

**Claims**

1. A radiation image detecting system for detecting a radiation image as an assembly of pixels by means of a coded-aperture method, said system comprising a radiation image receiving plane (3) formed by

a plurality of sensor groups (abef, bcde) for each equal area sub-matrix of a matrix of pixels, each of the sensor groups for an individual sub-matrix consisting of a plurality of radiation sensors (A0, A1, BO, B1) which cover one or more pixels but differ in arrangement from the sensors of the other sensor group or groups,

means for successively and separately bringing each one of the sensor groups for each sub-matrix into correspondence with the area of that sub-matrix,

a memory (4) for storing the outputs of the sensors in the successive groups as coded pixel signals,

and a computing means (5) for deriving from the coded pixel signals a set of pixel signals corresponding to all the individual pixels (Sij) within the area of the sub-matrix.

## Patentansprüche

1.  System zur Strahlungsbilddetektion zum Erfassen eines Strahlungsbildes in Form einer Anordnung von Bildelementen mittels einer codierten Fenster- bzw. Bildausschnittsmethode, wobei zu dem System eine Strahlungsbild-Empfangsfläche (3) gehört, gekennzeichnet durch

    eine Vielzahl von Sensorgruppen (abef, bcde) für jede gleich groß bemessene Teilmatrix einer Matrix von Bildelementen, wobei jede der Sensorgruppen für eine einzelne Teilmatrix aus einer Vielzahl von Strahlungssensoren (AO, A1, BO, B1) besteht, die ein oder mehrere Bildelemente abdecken, sich jedoch in ihrer Anordnung von den Sensoren der anderen Sensorgruppe oder -gruppen unterscheiden,

    Einrichtungen, um jede der Sensorgruppen für jede Teilmatrix sukzessiv und einzeln in Zuordnung zu der Fläche dieser Teilmatrix zu bringen,

    einen Speicher (4) zum Speichern der Ausgangssignale der Sensoren in den sukzessiven Gruppen als codierte Bildelementsignale,

    und eine Computereinrichtung (5), um aus den codierten Bildelementsignalen einen Satz von Bildelementsignalen entsprechend allen einzelnen Bildelementen (Sij) innerhalb der Fläche der Teilmatrix herzuleiten.

## Revendications

1.  Un système de détection d'image de rayonnement pour détecter une image de rayonnement sous la forme d'un ensemble de pixels au moyen d'un procédé d'ouverture codée, ledit système comprenant un plan de réception (3) d'image de rayonnement formé par

    une pluralité de groupes de capteurs (abef, bcde) pour chaque sous-matrice d'égale surface d'une matrice de pixels, chaque groupe de capteurs associés à une sousmatrice particulière consistant en une pluralité de capteurs de rayonnement (A0, B1, B0, B1) qui couvrent un ou plusieurs pixels mais diffèrent en disposition des capteurs du ou des autres groupes de capteurs,

    un moyen pour placer successivement et séparément chacun des groupes de capteurs pour chaque sous-matrice en face de la surface de cette sous-matrice,

    une mémoire (4) pour enregistrer les sorties des capteurs dans les groupes successifs sous la forme de signaux de pixels codés,

    et un moyen de calcul (5) pour dériver des signaux de pixel codés en ensemble de signaux de pixel correspondant à tous les pixels individuels (Sij) dans la surface de la sous-matrice.

FIG. 1(A)

FIG. 1(B)

pixels

FIG. 2

sensors

pixels

FIG. 3

sensors

FIG. 4